# EUROPEAN PATENT APPLICATION

(11) **EP 4 474 176 A1**
(43) Date of publication of application: **11.12.2024**
(21) Application number: 24178651.6
(22) Date of filing: 29.05.2024
(51) Int. Cl.: B60G 11/27, F16F 9/04

(54) **SLEEVE FOR AIR SPRING FOR VEHICLE AND AIR SPRING FOR VEHICLE INCLUDING SAME**

(30) Priority: 05.06.2023 KR 20230072329; 27.09.2023 KR 20230131034
(71) Applicant: Iljin Co., Ltd., Gyeongju-si, Gyeongsangbuk-do 38073 (KR)
(72) Inventor: Jeong, Sewoong, 44754 Ulsan (KR); Seo, Jonghyung, 05763 Seoul (KR); Kim, Byunghwan, 44978 Ulsan (KR); Kim, Sangwoo, 52039 Gyeongsangnam-do (KR)
(74) Representative: BCKIP Part mbB

(57) **Abstract**

A sleeve used as an air spring for a vehicle according to an example embodiment of the present disclosure, includes: at least an upper sleeve and a lower sleeve, in which an upper circumferential portion (522) of the upper sleeve is coupled to a top mount, a lower circumferential portion (524) of the upper sleeve is coupled to an upper circumferential portion (542) of the lower sleeve, a lower circumferential portion (544) of the lower sleeve is coupled to a piston portion, and one of the upper sleeve and the lower sleeve is configured to encompass an area where a lobe is formed.

## Description

### CROSS-REFERENCE TO RELATED APPLICATIONS

This application claims priority to Korean Patent Application No. 10-2023-0072329 filed on June 5, 2023, and Korean Patent Application No. 10-2023-0131034 filed on September 27, 2023.

### TECHNICAL FIELD

The present disclosure relates to a sleeve for an air spring for a vehicle and the air spring for a vehicle including the same, and more specifically, to a sleeve for an air spring for a vehicle which has improved durability while enhancing manufacturing efficiency, and the air spring for a vehicle including the same.

### BACKGROUND

A suspension for a vehicle is provided between a vehicle body and a wheel to connect the vehicle body and the wheel as rigid bodies by one or multiple links. The suspension is supported by a spring, a shock absorber and the like in a vertical direction, and serves to appropriately balance a mechanical relative movement between the vehicle body and the wheel by appropriately combining high rigidity and flexibility in other directions.

The suspension needs to satisfy the following basic conditions. That is, the suspension needs to effectively block irregular inputs generated from a road surface when the vehicle is travelling, thus providing a comfortable ride quality to passengers. The suspension needs to provide driving convenience by appropriately control the shaking of the vehicle body caused by a driving behavior of a driver and unevenness of the road surface. Further, when the vehicle travels on the unevenness road surface, the suspension needs to maintain a vertical load acting on each tire at a contact surface with the unevenness road surface at an appropriate level, thus ensuring the driving operation and stability of the vehicle during turning and braking.

In order to satisfy such conditions, various types of suspensions have been developed and applied to vehicles. In recent years, an air suspension has been widely applied to a deluxe vehicle. The air suspension improves the ride quality by changing a constant of an air spring to change a volume of a sleeve constituting the air spring, and automatically maintains a height of the vehicle by changing an amount of air.

Such a sleeve is repeatedly deformed. Accordingly, the sleeve needs to have excellent durability. However, a sleeve in the related art needs to have improved durability. For example, a rubber sleeve in the related art is manufactured by a complex reinforcing fiber process to improve durability and reinforce rigidity. This may entail significant deterioration in manufacturing efficiency of the sleeve.

### [Document in Related Art]

### [Patent Document]

(Patent Document 0001) European Patent No. 2,090,801 (January 26, 2009)

### SUMMARY

The present disclosure was made to solve the above-mentioned matters, and the present disclosure is for the purpose of providing a sleeve for an air spring for a vehicle which has improved durability while enhancing manufacturing efficiency, and the air spring for a vehicle including the same.

Further, the present disclosure is for the purpose of providing a sleeve for an air spring for a vehicle in which product performance may be improved by enhancing a degree of freedom in design, and the air spring for a vehicle including the same.

Further, the present disclosure is for the purpose of providing a sleeve for an air spring for a vehicle in which stress of a material may be easily managed by controlling an expansion rate of the sleeve, and the air spring for a vehicle including the same.

Further, the present disclosure is for the purpose of providing a sleeve for an air spring for a vehicle in which the sleeve may be manufactured to be divided into a plurality of sleeves by injection molding to improve a flow of the injection molding of each sleeve and improve a quality of each sleeve, and the air spring for a vehicle including the same.

According to an example embodiment of the present disclosure, a sleeve 500 for an air spring for a vehicle may include at least an upper sleeve 520 and a lower sleeve 540, in which an upper circumferential portion 522 of the upper sleeve 520 may be coupled to a top mount, a lower circumferential portion 524 of the upper sleeve 520 may be coupled to an upper circumferential portion 542 of the lower sleeve 540, a lower circumferential portion 544 of the lower sleeve 540 may be coupled to a piston portion, and one sleeve of the upper sleeve 520 and the lower sleeve 540 may be configured to encompass an area where a lobe is formed.

As an aspect, each of the upper sleeve 520 and the lower sleeve 540 may be manufactured with a thermoplastic plastic material by an injection molding.

As an aspect, the lower circumferential portion 524 of the upper sleeve 520 and the upper circumferential portion 542 of the lower sleeve 540 may be bonded to each other by a welding such that the lower circumferential portion 524 of the upper sleeve 520 is attached to the upper circumferential portion 542 of the lower sleeve 540.

As an aspect, the lower circumferential portion 524 of the upper sleeve 520 and the upper circumferential portion 542 of the lower sleeve 540 may be arranged to overlap each other, and a stepped portion 546 may be formed along a circumferential direction on one of the lower circumferential portion 524 of the upper sleeve 520 and the upper circumferential portion 542 of the lower sleeve 540 such that the other sleeve is seated on the step portion 546.

As an aspect, the lower circumferential portion 524 of the upper sleeve 520 may have a first outwardly-extending flange, and the upper circumferential portion 542 of the lower sleeve 540 may have a second outwardly-extending flange. The first and second outwardly-extending flanges may be bonded to each other by the welding such that the lower circumferential portion 524 of the upper sleeve 520 is attached to the upper circumferential portion 542 of the lower sleeve 540.

As an aspect, the lower circumferential portion 524 of the upper sleeve 520 and the upper circumferential portion 542 of the lower sleeve 540 may be arranged to overlap each other, the upper sleeve arranged inwardly in a region where the lower circumferential portion 524 and the upper circumferential portion 542 overlap each other may be made of a laser-energy absorbable material, the lower sleeve arranged outwardly in the region may be made of a laser-energy transmissible material, and the welding may be a laser welding.

According to an example embodiment of the present disclosure, the sleeve 500 for the air spring for a vehicle may further include an intermediate sleeve 660 interposed between the upper sleeve 620 and the lower sleeve 640. The lower circumferential portion 624 of the upper sleeve 620 may be coupled to an upper circumferential portion 662 of the intermediate sleeve 660, and a lower circumferential portion 664 of the intermediate sleeve 660 may be coupled to an upper circumferential portion 642 of the lower sleeve 640.

As an aspect, the lower circumferential portion 624 of the upper sleeve 620 and the upper circumferential portion 662 of the intermediate sleeve 660 may be bonded to each other by a welding such that the lower circumferential portion 624 of the upper sleeve 620 is attached to the upper circumferential portion 662 of the intermediate sleeve 660. The lower circumferential portion 664 of the intermediate sleeve 660 and the upper circumferential portion 642 of the lower sleeve 640 may be bonded to each other by the welding such that the lower circumferential portion 664 of the intermediate sleeve 660 is attached to the upper circumferential portion 642 of the lower sleeve 640.

As an aspect, the lower circumferential portion 624 of the upper sleeve 620 and the upper circumferential portion 662 of the intermediate sleeve 660 may be arranged to overlap each other, and a stepped portion 666 may be formed along a circumferential direction in one of the upper circumferential portion 662 of the intermediate sleeve 660 and the lower circumferential portion 624 of the upper sleeve 620 such that the other sleeve is seated on the step portion 666. The lower circumferential portion 664 of the intermediate sleeve 660 and the upper circumferential portion 642 of the lower sleeve 640 may be arranged to overlap each other, and a stepped portion 668 may be formed along a circumferential direction in one of the lower circumferential portion 664 of the intermediate sleeve 660 and the upper circumferential portion 642 of the lower sleeve 640 such that the other sleeve is seated on the step portion 668.

As an aspect, the lower circumferential portion 624 of the upper sleeve 620 and the upper circumferential portion 662 of the intermediate sleeve 660 may be arranged to overlap each other. The lower circumferential portion 664 of the intermediate sleeve 660 and the upper circumferential portion 642 of the lower sleeve 640 may be arranged to overlap each other. The sleeve, which is arranged inwardly in each of a first region where the lower circumferential portion 624 of the upper sleeve 620 and the upper circumferential portion 662 of the intermediate sleeve 660 are arranged to overlap each other and a second region where the lower circumferential portion 664 of the intermediate sleeve 660 and the upper circumferential portion 642 of the lower sleeve 640 are arranged to overlap each other, may be made of a laser-energy absorbable material. The sleeve, which is arranged outwardly in the first region and the second region, may be made of a laser-energy transmissible material. The welding may be a laser welding.

As an aspect, the lower circumferential portion 624 of the upper sleeve 620 may have a third outwardly-extending flange, and the upper circumferential portion 662 of the intermediate sleeve 660 may have a fourth outwardly-extending flange. The third outwardly-extending flange and the fourth outwardly-extending flange may be welded such that the lower circumferential portion 624 of the upper sleeve 620 is attached to the upper circumferential portion 662 of the intermediate sleeve 660. The lower circumferential portion 664 of the intermediate sleeve 660 may have a fifth outwardly-extending flange, and the upper circumferential portion 642 of the lower sleeve 640 may have a sixth outwardly-extending flange. The fifth and sixth outwardly-extending flanges may be welded such that the lower circumferential portion 664 of the intermediate sleeve 660 is attached to the upper circumferential portion 642 of the lower sleeve 640.

According to an example embodiment of the present disclosure, a sleeve is molded to be divided into a plurality of independent sleeves by injection molding, which makes it possible to improve durability and enhance manufacturing efficiency. Further, it is possible to enhance a degree of freedom in design and improve product performance. Further, it is possible to control an expansion rate of the sleeve, thus easily managing stress of a material.

Further, according to an example embodiment of the present disclosure, by manufacturing a sleeve to be divided into a plurality of sleeves by injection molding, it is possible to improve a flow of the injection molding of each sleeve and improve a quality of each sleeve.

### BRIEF DESCRIPTION OF THE DRAWINGS

FIG. 1 is a perspective view of a sleeve according to an example embodiment of the present disclosure.
FIG. 2 is an exploded perspective view of the sleeve illustrated in FIG. 1.
FIG. 3 is a cross-sectional view of the sleeve illustrated in FIG. 1.
FIG. 4 is a perspective view of a sleeve according to another example embodiment of the present disclosure.
FIG. 5 is an exploded perspective view of the sleeve illustrated in FIG. 4.
FIG. 6 is a cross-sectional view of the sleeve illustrated in FIG. 4.

### DETAILED DESCRIPTION

Various modifications may be added to example embodiments of the present disclosure. Specific example embodiments will be described with reference to the drawings. However, the present disclosure is not limited to the specific example embodiments but should be understood as including various modifications, equivalents or alterations, which fall within the scope and the technical sprit of the present disclosure. In descriptions of the drawings, like reference numerals will refer to the same or similar constituent elements. Further, although the terms such as a "first," a "second," "A," and the like used herein may be used to explain various constituent elements, such constituent elements should not be limited by such terms. The above terms may be used to distinguish a constituent element from another constituent element. For example, a first constituent element may be named as a second constituent element in another description of the specification without departing from the scope of the present disclosure. Conversely, the second constituent element may be named as the first constituent element in another description of the specification. The term "and/or" may be used to represent a combination of a plurality of related items described herein or at least one of the plurality of related items. Further, when a constituent element is referred to as being "coupled" or "connected" to another constituent element, the constituent element may be directly coupled or directly connected to the another constituent element, but yet another constituent element may be provided between the constituent element and the another constituent element. Further, when a constituent element is referred to as being "directly coupled" or "directly connected" to another constituent element, yet another constituent element may not be provided between the constituent element and the another constituent element. The terms used herein are merely used to describe specific example embodiments and do not limit the present disclosure. Expressions in the singular form should be understood to encompass expressions in the plural form unless the context clearly indicates otherwise. The term "includes," "has" or the like are intended to include features, numeric characters, operations, operations, constituent elements, parts, or a combination thereof, and should be understood not to exclude one or more other features, numeric characters, operations, operations, constituent elements, parts, or a combination thereof, or additional features and the like. Terms a "first," a "second," and the like are used to distinguish a plurality of constituent elements from each other, and the order or importance of corresponding constituent elements is not limited by these terms. Unless otherwise defined, all technical and scientific terms used herein have the same meaning commonly understood by those skilled in the art to which the present disclosure pertains. In addition, the commonly-used predefined terms should be interpreted as consistent with the meanings of the context in the related art and should not be interpreted as having ideal or excessive formal meanings unless otherwise defined in this application. Further, the term "about" used herein should be understood to include a manufacturing tolerance range in the technical field to which the present disclosure pertains.

When one constituent element "comprise or includes" another constituent element through the specification and the claims, this means that the one constituent element may further include other constituent elements, rather than excluding other constituent elements, unless other stated. Hereinafter, preferred example embodiments of the present disclosure will be described in detail with reference to the accompanying drawings.

An air spring may be arranged between a top mount and a piston portion to act as a spring. For example, the air spring may include a housing and a sleeve.

According to an example embodiment of the present disclosure, one end of the sleeve may be hermetically fixed to the top mount and the other end thereof is hermetically fixed to the piston portion. The sleeve may be enclosed by the housing.

As an example, the sleeve is an air bag whose volume may vary with up and down movement of the piston portion. That is, the volume of the sleeve, which has a constant internal pressure, varies with the up and down movement. With the variation in the internal pressure, the sleeve acts as the spring.

According to an example embodiment of the present disclosure, one end of the sleeve may be hermetically fixed to the top mount and the other end thereof may be hermetically fixed to an inner surface of the piston portion. The sleeve may be enclosed by the housing. When the piston portion is moved upward relative to the sleeve in an axial direction, a bent portion of the sleeve, that is, a portion where a rolling lobe is formed, may be rolled together with the piston portion to be formed in a round shape. Accordingly, air inside the sleeve is compressed so that the sleeve acts as an air spring.

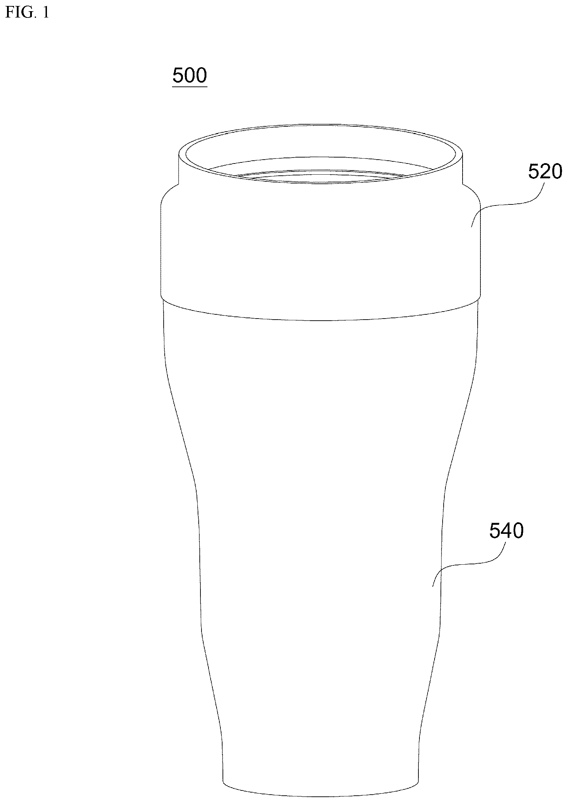

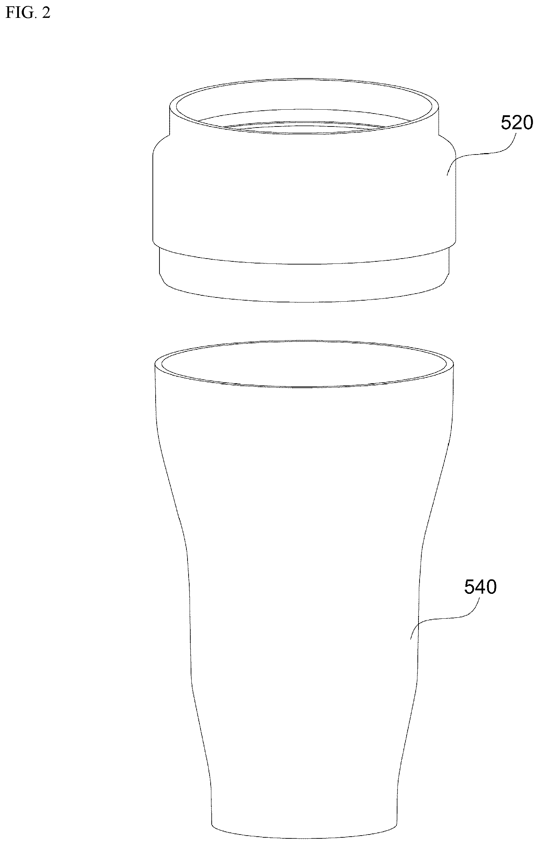

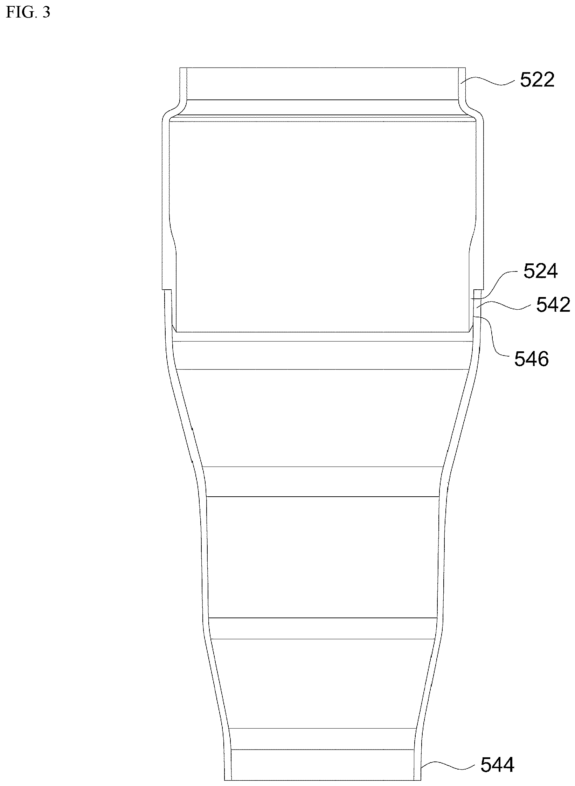

FIG. 1 is a perspective view of a sleeve according to an example embodiment of the present disclosure. The sleeve illustrated in FIG. 1 is a sleeve before being mounted to a top mount and a piston portion to form a lobe. FIG. 2 is an exploded perspective view of the sleeve illustrated in FIG. 1. FIG. 3 is a cross-sectional view of the sleeve illustrated in FIG. 1.

As illustrated in FIGS. 1 to 3, for example, a sleeve 500 for an air spring for a vehicle according to an example embodiment of the present disclosure may be entirely formed in a cylindrical shape. The sleeve 500 may include at least an upper sleeve 520 and a lower sleeve 540. An upper circumferential portion 522 of the upper sleeve 520 may be coupled to the top mount and a lower circumferential portion 524 of the upper sleeve 520 may be coupled to an upper circumferential portion 542 of the lower sleeve 540. A lower circumferential portion 544 of the lower sleeve 540 is coupled to the piston portion.

In FIG. 1, the lower sleeve 540 out of the upper sleeve 520 and the lower sleeve 540 is configured to encompass an area where the rolling lobe is formed. Alternatively, the upper sleeve 520 may be configured to encompass the area where the rolling lobe is formed.

In the present disclosure, the sleeve 500 may be manufactured to be divided into a first sleeve encompassing the area where the rolling lobe is formed, and a second sleeve not encompassing the area. With this configuration, it is possible to improve a degree of freedom of design of the sleeve 500 and enhance manufacturing efficiency of the sleeve 500 while satisfying high rigidity required for the sleeve 500.

For example, the upper sleeve 520 and the lower sleeve 540 may be made of the same material. Further, the second sleeve not encompassing the area where the rolling lobe is formed, may be made of a material having a higher rigidity than that of the first sleeve. This is because that the material having the higher rigidity may not be suitable for forming the rolling lobe.

Further, the upper sleeve 520 and the lower sleeve 540 may be manufactured with a thermoplastic elastomer (TPE) material by injection molding.

Like in a general plastic material, the thermoplastic elastomer material may be molded and reused by injection, extrusion blow molding, or the like, and has an elastomeric property.

According to an example embodiment of the present disclosure, the upper sleeve 520 and the lower sleeve 540 may be manufactured independently of each other with the thermoplastic elastomer material by the injection molding, which improves a degree of freedom of design of each of the upper sleeve 520 and the lower sleeve 540. For example, the first sleeve encompassing the area where the rolling lobe is formed, may be designed to have superiorities in rigidity and spring property by changing a thickness of the first sleeve in a longitudinal direction.

In addition, the flow of the injection molding of the sleeve 500 may also be improved. The sleeve 500 according to an example embodiment of the present disclosure may be designed to have different inner diameters in the longitudinal direction. This might cause deterioration in the flow of the injection molding, if the injection molding were performed to form a single sleeve, which makes it difficult to manage the quality of the sleeve. In the present disclosure, since the sleeve 500 is manufactured to be divided into the upper sleeve 520 and the lower sleeve 540, it is possible to improve the flow of the injection molding.

According to an example embodiment of the present disclosure, the lower circumferential portion 524 of the upper sleeve 520 and the upper circumferential portion 542 of the lower sleeve 540 are welded to each other such that the lower circumferential portion 524 of the upper sleeve 520 is attached to the upper circumferential portion 542 of the lower sleeve 540.

For example, the lower circumferential portion 524 of the upper sleeve 520 may be attached to the upper circumferential portion 542 of the lower sleeve 540 by positioning the upper sleeve 520 and the lower sleeve 540 (a butt j oint) such that an end of the lower circumferential portion 524 of the upper sleeve 520 and an end of the upper circumferential portion 542 of the lower sleeve 540 face each other, and by welding such mutually-facing portions of the upper sleeve 520 and the lower sleeve 540 to each other.

More preferably, according to an example embodiment of the present disclosure, as illustrated in FIG 3, the lower circumferential portion 524 of the upper sleeve 520 and the upper circumferential portion 542 of the lower sleeve 540 may be arranged to overlap each other. By welding such an overlapping region, the lower circumferential portion 524 of the upper sleeve 520 may be attached to the upper circumferential portion 542 of the lower sleeve 540.

Further, in order to support the welding, a stepped portion may be formed along a circumferential direction in one of the lower circumferential portion 524 of the upper sleeve 520 and the upper circumferential portion 542 of the lower sleeve 540 such that the upper sleeve 520 (or the lower sleeve 540) is seated on the lower sleeve 540 (or the upper sleeve 520). As an example, in FIG. 3, a stepped portion 546 is illustrated as being formed in the lower circumferential portion 524 of the upper sleeve 520 along the circumferential direction.

Further, according to an example embodiment of the present disclosure, the upper sleeve 520 and the lower sleeve 540 may be bonded to each other in the overlapping region by laser welding. That is, the lower circumferential portion 524 of the upper sleeve 520 and the upper circumferential portion 542 of the lower sleeve 540 may be bonded to each other by laser welding along the circumferential direction. To support this, as an example, the sleeve arranged inwardly may be made of a laser-energy absorbable material, and the sleeve arranged outwardly may be made of a laser-energy transmissible material. The upper sleeve arranged inwardly may include a carbon black as an example of a laser-energy absorbable material.

Further, according to an example embodiment of the present disclosure, the lower circumferential portion 524 of the upper sleeve 520 and the upper circumferential portion 542 of the lower sleeve 540 may have outwardly-extending flanges, respectively.

The flanges may be arranged to face each other and be in contact with each other. By welding the flanges, the lower circumferential portion 524 of the upper sleeve 520 may be attached to the upper circumferential portion 542 of the lower sleeve 540.

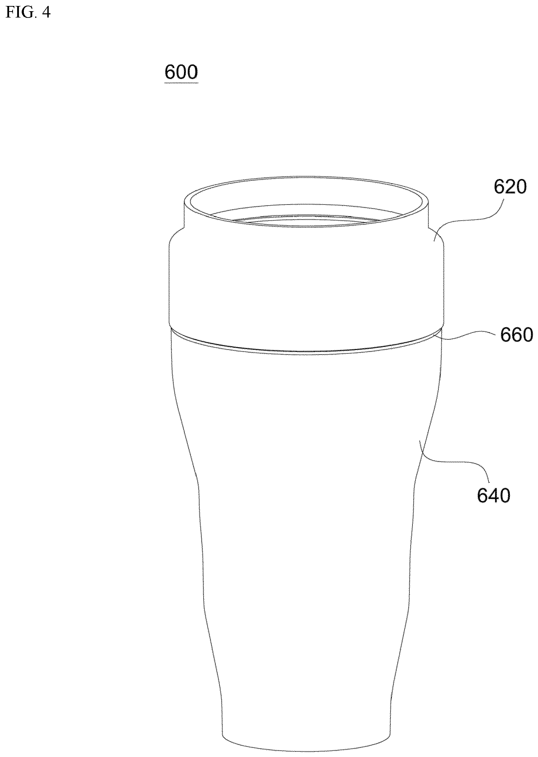

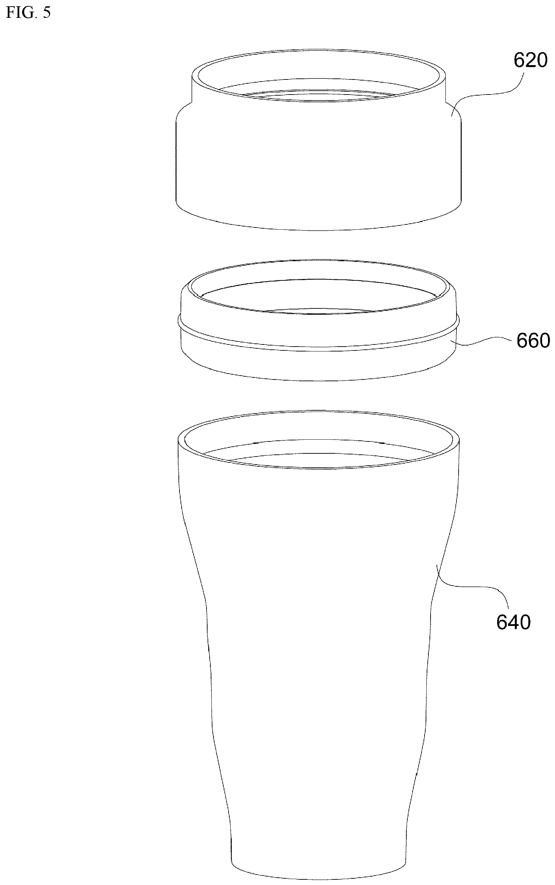

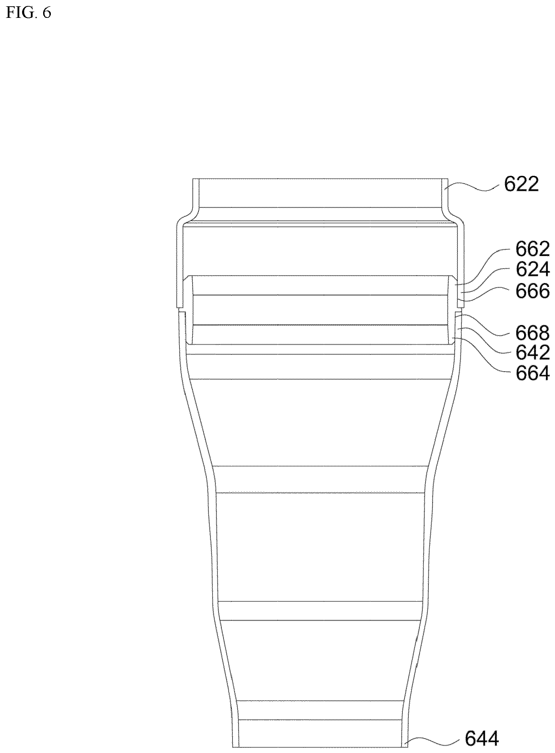

FIG. 4 is a perspective view of a sleeve according to another example embodiment of the present disclosure. FIG. 5 is an exploded perspective view of the sleeve illustrated in FIG. 4. FIG. 6 is a cross-sectional view of the sleeve illustrated in FIG. 4.

Referring to FIGS. 4 to 6, a sleeve 600 according to an example embodiment of the present disclosure may further include an intermediate sleeve 660 interposed between an upper sleeve 620 and a lower sleeve 640. A lower circumferential portion 624 of the upper sleeve 620 may be coupled to an upper circumferential portion 662 of the intermediate sleeve 660, and a lower circumferential portion 664 of the intermediate sleeve 660 may be coupled to an upper circumferential portion 642 of the lower sleeve 640. A lower circumferential portion 644 of the lower sleeve 640 may be coupled to a piston portion. An upper circumferential portion 622 of the upper sleeve 620 may be coupled to the top mount.

As an example, the lower circumferential portion 624 of the upper sleeve 620 and the upper circumferential portion 662 of the intermediate sleeve 660 are welded such that the lower circumferential portion 624 of the upper sleeve 620 is attached to the upper circumferential portion 662 of the intermediate sleeve 660. The lower circumferential portion 664 of the intermediate sleeve 660 and the upper circumferential portion 642 of the lower sleeve 640 are welded such that the lower circumferential portion 664 of the intermediate sleeve 660 may be attached to the upper circumferential portion 642 of the lower sleeve 640.

For example, the lower circumferential portion 624 of the upper sleeve 620 may be attached to the upper circumferential portion 662 of the intermediate sleeve 660 by positioning such that an end of the lower circumferential portion 624 of the upper sleeve 620 and an end of the upper circumferential portion 662 of the intermediate sleeve 660 face each other, and by welding the upper sleeve 620 and the intermediate sleeve 660 in mutually-facing portions.

With this configuration, a degree of freedom in design of the sleeve 600 of the present disclosure may be further improved. For example, the upper sleeve 620 and the lower sleeve 640 may be manufactured independently of each other with different materials. In a structure in which the upper sleeve 620 and the lower sleeve 640 are bonded to each other, a degree of freedom of material selection may be limited for bonding. Meanwhile, in a case where the intermediate sleeve 660 is interposed between the upper sleeve 620 and the lower sleeve 640, even if a material that is not easy to bond the upper sleeve 620 and the lower sleeve 640 is selected, the upper sleeve 620 and the lower sleeve 640 may be easily bonded to each other by the intermediate sleeve 660.

More preferably, according to an example embodiment of the present disclosure, as illustrated in FIG. 6, the lower circumferential portion 624 of the upper sleeve 620 and an upper circumferential portion 662 of the intermediate sleeve 660 may be arranged to overlap each other, and the lower circumferential portion 664 of the intermediate sleeve 660 and the upper circumferential portion 642 of the lower sleeve 640 may be arranged to overlap each other. In this case, a stepped portion 666 may be further formed in one of the upper circumferential portion 662 of the intermediate sleeve 660 and the lower circumferential portion 624 of the upper sleeve 620 such that the intermediate sleeve 660 (or the upper sleeve 620) is seated on the upper sleeve 620 (or the intermediate sleeve 660) along the circumferential direction. A stepped portion 668 may be further formed in one of the lower circumferential portion 664 of the intermediate sleeve 660 and the upper circumferential portion 642 of the lower sleeve 640 such that the intermediate sleeve 660 (or the lower sleeve 640) is seated on the lower sleeve 640 (or the intermediate sleeve 660) along the circumferential direction. In FIG. 6, as an example, the stepped portions 666 and 668 are illustrating as being formed on the upper circumferential portion 662 of the intermediate sleeve 660 and the lower circumferential portion 664 of the intermediate sleeve 660

The lower circumferential portion 624 of the upper sleeve 620 and the upper circumferential portion 662 of the intermediate sleeve 660 are arranged to overlap each other. By welding such a mutually-overlapping region, the lower circumferential portion 624 of the upper sleeve 620 is attached to the upper circumferential portion 662 of the intermediate sleeve 660. Similarly, the lower circumferential portion 664 of the intermediate sleeve 660 and the upper circumferential portion 642 of the lower sleeve 640 are arranged to overlap each other. By welding such mutually-overlapping regions, the lower circumferential portion 664 of the intermediate sleeve 660 may be attached to the upper circumferential portion 642 of the lower sleeve 640. As an example, in FIG. 6, the intermediate sleeve 660 is arranged inward in the overlapping region, and the upper sleeve 620 and the lower sleeve 640 are arranged outward in the overlapping region. In such an arrangement structure, in a case where the intermediate sleeve 660 and the upper sleeve 620 or the lower sleeve 640 are welded by laser, the intermediate sleeve 660 may be made of a laser-energy absorbable material (for example, carbon black), and the upper sleeve 620 and the lower sleeve 640 may be made of a laser-energy transmissible material.

Further, according to an example embodiment of the present disclosure, the lower circumferential portion 624 of the upper sleeve 620 and the upper circumferential portion 662 of the intermediate sleeve 660 may be configured to have outwardly-extending flanges, respectively. By arranging the flanges to face each other and be in contact with each other and by welding the flanges, the lower circumferential portion 624 of the upper sleeve 620 may be attached to the upper circumferential portion 662 of the intermediate sleeve 660.

Similarly, the lower circumferential portion 664 of the intermediate sleeve 660 and the upper circumferential portion 642 of the lower sleeve 640 may be configured to have outwardly-extending flanges, respectively. By arranging the flanges to face each other and be in contact with each other and by welding the flanges, the lower circumferential portion 664 of the intermediate sleeve 660 may be attached to the upper circumferential portion 642 of the lower sleeve 640.

### EXPLANATION OF REFERENCE NUMERALS

500, 600: Sleeve
520: Upper sleeve
540: Lower sleeve
660: Intermediate sleeve

## Claims

1. A sleeve (500) for an air spring for a vehicle, comprising:
at least an upper sleeve (520) and a lower sleeve (540),
wherein an upper circumferential portion (522) of the upper sleeve (520) is coupled to a top mount and a lower circumferential portion (524) of the upper sleeve (520) is coupled to an upper circumferential portion (542) of the lower sleeve (540),
wherein a lower circumferential portion (544) of the lower sleeve (540) is coupled to a piston portion, and
wherein one of the upper sleeve (520) and the lower sleeve (540) is configured to encompass an area where a lobe is formed.

2. The sleeve (500) for the air spring for a vehicle of Claim 1, wherein each of the upper sleeve (520) and the lower sleeve (540) is manufactured with a thermoplastic plastic material by an injection molding.

3. The sleeve (500) for the air spring for a vehicle of Claim 1 or 2, wherein the lower circumferential portion (524) of the upper sleeve (520) and the upper circumferential portion (542) of the lower sleeve (540) are bonded to each other by a welding such that the lower circumferential portion (524) of the upper sleeve (520) is attached to the upper circumferential portion (542) of the lower sleeve (540).

4. The sleeve (500) for the air spring for a vehicle of Claim 3, wherein the lower circumferential portion (524) of the upper sleeve (520) and the upper circumferential portion (542) of the lower sleeve (540) are arranged to overlap each other, and
wherein a stepped portion (546) is formed along a circumferential direction on one of the lower circumferential portion (524) of the upper sleeve (520) and the upper circumferential portion (542) of the lower sleeve (540) such that the upper sleeve (520) is seated on the lower sleeve (540) or the lower sleeve (540) is seated on the upper sleeve (520).

5. The sleeve (500) for the air spring for a vehicle of Claim 3, wherein the lower circumferential portion (524) of the upper sleeve (520) and the upper circumferential portion (542) of the lower sleeve (540) have outwardly-extending flanges, respectively, and
wherein the outwardly-extending flanges are bonded to each other by the welding such that the lower circumferential portion (524) of the upper sleeve (520) is attached to the upper circumferential portion (542) of the lower sleeve (540).

6. The sleeve (500) for the air spring for a vehicle of any one of Claims 3 to 5, wherein the lower circumferential portion (524) of the upper sleeve (520) and the upper circumferential portion (542) of the lower sleeve (540) are arranged to overlap each other,
wherein the sleeve arranged inwardly in a region where the lower circumferential portion (524) and the upper circumferential portion (542) overlap each other is made of a laser-energy absorbable material,
wherein the sleeve arranged outwardly in the region is made of a laser-energy transmissible material, and
wherein the welding is a laser welding.

7. The sleeve (500) for the air spring for a vehicle of Claim 1 or 2, further comprising: an intermediate sleeve interposed between the upper sleeve (620) and the lower sleeve (640),
wherein the lower circumferential portion (624) of the upper sleeve (620) is coupled to an upper circumferential portion (662) of the intermediate sleeve (660), and a lower circumferential portion (664) of the intermediate sleeve (660) is coupled to an upper circumferential portion (642) of the lower sleeve (640).

8. The sleeve (500) for the air spring for a vehicle of Claim 7, wherein the lower circumferential portion (624) of the upper sleeve (620) and the upper circumferential portion (662) of the intermediate sleeve (660) are bonded to each other by a welding such that the lower circumferential portion (624) of the upper sleeve (620) is attached to the upper circumferential portion (662) of the intermediate sleeve (660), and
wherein the lower circumferential portion (664) of the intermediate sleeve (660) and the upper circumferential portion (642) of the lower sleeve (640) are bonded to each other by the welding such that the lower circumferential portion (664) of the intermediate sleeve (660) is attached to the upper circumferential portion (642) of the lower sleeve (640).

9. The sleeve (500) for the air spring for a vehicle of Claim 8, wherein the lower circumferential portion (624) of the upper sleeve (620) and the upper circumferential portion (662) of the intermediate sleeve (660) are arranged to overlap each other, and a stepped portion (666) is formed along a circumferential direction in one of the upper circumferential portion (662) of the intermediate sleeve (660) and the lower circumferential portion (624) of the upper sleeve (620) such that the intermediate sleeve (660) is seated on the upper sleeve (620) or the upper sleeve (620) is seated on the intermediate sleeve (660), and
wherein the lower circumferential portion (664) of the intermediate sleeve (660) and the upper circumferential portion (642) of the lower sleeve (640) are arranged to overlap each other, and a stepped portion (668) is formed along a circumferential direction in one of the lower circumferential portion (664) of the intermediate sleeve (660) and the upper circumferential portion (642) of the lower sleeve (640) such that the intermediate sleeve (660) is seated on the lower sleeve (640) or the lower sleeve (640) is seated on the intermediate sleeve (660).

10. The sleeve (500) for the air spring for a vehicle of Claim 8 or 9, wherein the lower circumferential portion (624) of the upper sleeve (620) and the upper circumferential portion (662) of the intermediate sleeve (660) are arranged to overlap each other,
wherein the lower circumferential portion (664) of the intermediate sleeve (660) and the upper circumferential portion (642) of the lower sleeve (640) are arranged to overlap each other,
wherein the sleeve which is arranged inwardly in each of a first region where the lower circumferential portion (624) of the upper sleeve (620) and the upper circumferential portion (662) of the intermediate sleeve (660) are arranged to overlap each other and a second region where the lower circumferential portion (664) of the intermediate sleeve (660) and the upper circumferential portion (642) of the lower sleeve (640) are arranged to overlap each other, is made of a laser-energy absorbable material,
wherein the sleeve, which are arranged outwardly in the first region and the second region, is made of a laser-energy transmissible material, and
wherein the welding is a laser welding.

11. The sleeve (500) for the air spring for a vehicle of Claim 8, wherein the lower circumferential portion (624) of the upper sleeve (620) and the upper circumferential portion (662) of the intermediate sleeve (660) have first outwardly-extending flanges, respectively,
wherein the first outwardly-extending flanges of the lower circumferential portion (624) of the upper sleeve (620) and the upper circumferential portion (662) of the intermediate sleeve (660) are welded such that the lower circumferential portion (624) of the upper sleeve (620) is attached to the upper circumferential portion (662) of the intermediate sleeve (660),
wherein the lower circumferential portion (664) of the intermediate sleeve (660) and the upper circumferential portion (642) of the lower sleeve (640) have second outwardly-extending flanges, respectively, and
wherein the second outwardly-extending flanges of the lower circumferential portion (664) of the intermediate sleeve (660) and the upper circumferential portion (642) of the lower sleeve (640) are welded such that the lower circumferential portion (664) of the intermediate sleeve (660) is attached to the upper circumferential portion (642) of the lower sleeve (640).

12. The sleeve (500) for the air spring for a vehicle of any one of the preceding Claims, wherein the one sleeve of the upper sleeve or the lower sleeve configured to encompass the area where the lobe is formed, is manufactured with a material having a higher rigidity than the remaining sleeve.

13. The sleeve (500) for the air spring for a vehicle of any one of the preceding Claims, wherein the one sleeve of the upper sleeve or the lower sleeve configured to encompass the area where the lobe is formed, has sections having different thicknesses along a longitudinal direction.

14. The sleeve (500) for the air spring for a vehicle of any one of Claims 6 to 13 insofar as being dependent upon claim 6, wherein the sleeve arranged inwardly includes a carbon black.

15. An air spring for a vehicle comprising:
the sleeve (500, 600) of any one of the preceding Claims;
a top mount mounted on the upper circumferential portion (522, 622) of the upper sleeve (520, 620); and
a piston portion mounted on the lower circumferential portion (544, 644) of the lower sleeve (540, 640).
